# FASCICULE DE BREVET EUROPEEN

(11) **EP 0 807 035 B1**
(45) Date de publication et mention de la délivrance du brevet: **12.07.2000**
(21) Numéro de dépôt: 96941080.2
(22) Date de dépôt: 29.11.1996
(51) Int. Cl.: B60S 1/34

(54) **DISPOSITIF D'ESSUYAGE POUR UNE VITRE DE VEHICULE AUTOMOBILE**
KRAFTZEUGSCHEIBENWISCHVORRICHTUNG
MOTOR VEHICLE WINDOW WIPER DEVICE

(30) Priorité: 07.12.1995 FR 9514671
(43) Date de publication de la demande: 19.11.1997
(73) Titulaire: VALEO SYSTEMES D'ESSUYAGE, 78321 La Verrière (FR)
(72) Inventeur: EUSTACHE, Jean-Pierre, F-92160 Antony (FR)
(74) Mandataire: Kohn, Philippe
(86) Numéro de dépôt international: FR9601896
(87) Numéro de publication internationale: WO9720717

(56) Documents cités:
- DE-A- 3 329 146
- DE-A- 4 324 783
- FR-A- 2 625 715

## Description

L'invention concerne un dispositif d'essuyage d'une vitre de véhicule automobile.

L'invention concerne plus particulièrement un dispositif d'essuyage pour une vitre de véhicule automobile, du type dans lequel un essuie-glace s'étend longitudinalement parallèlement au plan général de la vitre à essuyer, du type dans lequel l'essuie-glace est monté à l'extrémité supérieure d'un arbre d'entraînement en balayage rotatif alterné dont l'axe est sensiblement perpendiculaire au plan général de la vitre, du type dans lequel l'arbre d'entraînement est monté à rotation dans un palier fixe par rapport au véhicule, et du type dans lequel l'arbre d'entraînement est entraîné en rotation par une manivelle qui s'étend dans un plan sensiblement perpendiculaire à l'axe de l'arbre et qui est reliée par une tringlerie à un motoréducteur, l'arbre d'entraînement étant monté à rotation dans le palier par au moins une articulation à rotule avec l'inclinaison de son axe qui est destinée à varier par rapport au plan de la vitre lorsqu'il est entraîné en rotation autour de son axe.

Un dispositif d'essuyage de ce type est connu du document FR-A-2.625.715.

Un tel dispositif permet de balayer la vitre à l'aide d'une raclette en matériau élastomère souple qui est plaquée contre le pare-brise par un balai d'essuie-glace porté par l'essuie-glace.

En effet, les vitres de véhicule automobile, et notamment les pare-brise, sont généralement galbées de sorte qu'il est nécessaire que le balai d'essuie-glace possède une structure articulée qui impose à la raclette d'être en contact sur toute sa longueur avec la vitre.

La structure articulée du balai permet en outre d'assurer que la pression de contact soit sensiblement homogène sur toute la longueur de la raclette, et, à cet effet, elle est déformable dans un plan qui est sensiblement perpendiculaire à la vitre à essuyer et la structure articulée maintient, à l'aide de griffes, la raclette dans son plan de déformation.

Toutefois, lorsque le balai d'essuie-glace parcourt la vitre dans son mouvement de balayage rotatif alterné, le plan de déformation de sa structure articulée ne reste pas rigoureusement perpendiculaire au plan de la vitre à essuyer, du fait du galbe de la vitre, si bien que la raclette est en contact avec la vitre selon un angle qui varie en fonction de la position de l'essuie-glace.

Or, il est apparu qu'une telle inclinaison de la raclette nuit de manière importante à la qualité d'essuyage du balai d'essuie-glace.

Un cas particulièrement défavorable est le cas où, s'agissant d'un pare-brise de véhicule automobile, l'essuie-glace est conçu pour essuyer une extrémité latérale recourbée vers l'arrière du pare-brise en arrivant sensiblement parallèlement au montant latéral du pare-brise. L'angle d'inclinaison de la raclette par rapport à la vitre est alors important et peut nuire à l'efficacité de l'essuie-glace dans cette zone.

Dans le but d'apporter une solution à ce problème, l'invention propose un essuie-glace du type vu précédemment, caractérisé en ce que l'arbre d'entraînement est monté à rotation dans le palier par deux articulations à rotule, en ce que l'une au moins des articulations à rotule est agencée de sorte que son centre de rotation est excentré par rapport à l'axe de l'arbre d'entraînement, et en ce que l'arbre est solidaire en rotation d'une rotule interne de l'articulation excentrée.

Selon divers modes de réalisation de l'invention
- l'une des articulations à rotule est agencée de sorte que son centre de rotation coïncide avec l'axe de l'arbre d'entraînement, de manière à former le centre du mouvement d'inclinaison de l'arbre d'entraînement ;
- le palier est agencé contre une face interne d'un panneau de carrosserie du véhicule au travers duquel dépasse l'extrémité supérieure de l'arbre d'entraînement, et l'articulation à rotule dont le centre coïncide avec l'axe de l'arbre est agencée axialement sur l'arbre à proximité du panneau de carrosserie, à une extrémité supérieure du palier ;
- l'une au moins des extrémités axiales du palier est fermée transversalement de manière étanche par un joint annulaire à membrane souple dont la périphérie externe est fixée sur l'extrémité axiale du palier, et dont la périphérie interne coopère de manière étanche avec l'arbre d'entraînement ;
- le palier est sensiblement tubulaire, et les articulations à rotule comportent chacune une bague externe de guidage fixée sur une surface cylindrique interne du palier, et une rotule interne solidaire de l'arbre ;
- la rotule interne d'au moins une articulation comporte un prolongement axial dirigé en direction de l'extrémité axiale du palier la plus proche, et le joint à membrane porte de manière étanche sur le prolongement axial ;
- la manivelle d'entraînement en rotation de l'arbre est agencée sur l'arbre, axialement en dessous du palier ;
- le palier est fermé à ses deux extrémités axiales par un joint à membrane ;
- la manivelle d'entraînement en rotation de l'arbre est agencée sur l'arbre, axialement entre l'articulation à rotule supérieure et le panneau de carrosserie ;
- le palier est fermé à son extrémité axiale inférieure par une paroi transversale.

D'autres caractéristiques et avantages de l'invention apparaîtront à la lecture de la description détaillée qui suit pour la compréhension de laquelle on se reportera aux dessins annexés dans lesquels :
- les figures 1 et 2 sont deux vues en coupe axiale, selon deux directions perpendiculaires, d'un premier mode de réalisation d'un palier d'essuie-glace conforme aux enseignements de l'invention ;
- la figure 3 est une vue similaire à celle de la figure 1 dans laquelle l'axe de l'arbre d'entraînement a pivoté par rapport à sa position représentée à la figure 1 ;
- la figure 4 est une vue en coupe axiale d'une variante de réalisation d'un palier selon l'invention ;
- les figures 5 et 6 sont des vues en coupe transversale selon les lignes respectives 5-5 et 6-6 de la figure 4.

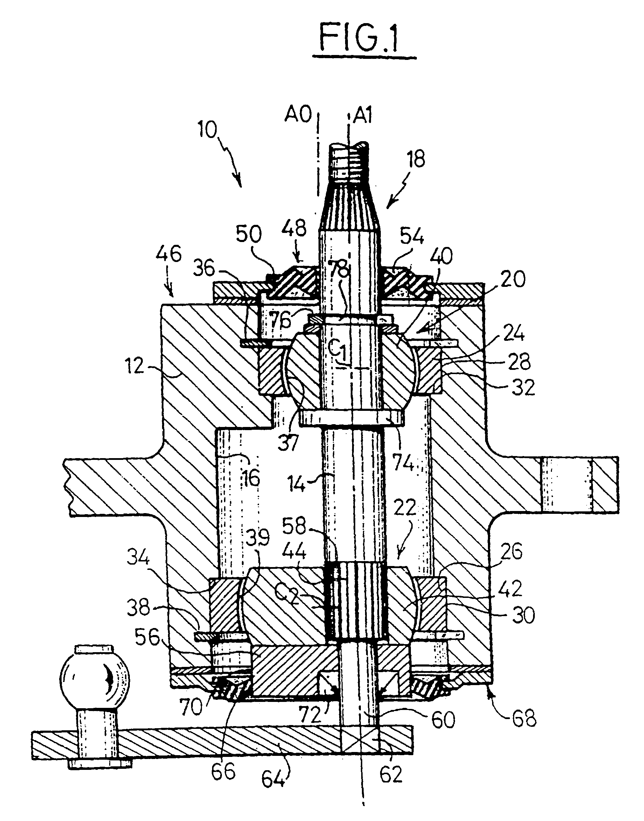

On a représenté sur les figures 1 à 3 un palier 10 pour un dispositif d'essuyage d'une vitre de véhicule automobile.

Le palier 10 comporte un corps de palier 12 sensiblement tubulaire, d'axe A0, qui est agencé sensiblement perpendiculairement en regard de la face interne d'un panneau de carrosserie (non représenté) qui est situé généralement au niveau du bord inférieur de la vitre.

Un arbre d'entraînement 14, d'axe A1, est monté axialement à rotation dans l'alésage interne 16 du corps de palier 12 et comporte une extrémité supérieure 18, qui dépasse au travers d'un orifice du panneau de carrosserie à l'extérieur du véhicule, et sur laquelle un essuie-glace est destiné à être fixé.

L'arbre 14 est monté dans le corps de palier 12 par deux articulations à rotule, respectivement supérieure 20 et inférieure 22.

Chaque articulation à rotule 20, 22 comporte une bague externe 24, 26 de guidage et de positionnement qui est fixée dans l'alésage interne 16 du corps de palier 12.

La bague externe 24, 26 est de forme générale annulaire et comporte une surface latérale externe 28, 30 cylindrique de manière à être reçue dans un logement cylindrique correspondant formé dans l'alésage interne 16 du corps de palier 12.

Dans l'exemple de réalisation qui est représenté sur les figures 1 à 3, la bague externe 24, 26 de chacune des articulations à rotule 20, 22 est fixée axialement dans son logement correspondant, selon une première direction en appui contre une face d'épaulement radiale 32, 34 réalisée venue de matière avec le corps de palier 12 et, selon la direction opposée, par un anneau élastique 36, 38.

Chaque bague externe 24, 26 comporte une surface interne sphérique 37, 39 dans laquelle est montée une rotule interne 40, 42 qui est susceptible de pivoter autour du centre C1, C2 de la surface sphérique interne 37, 39 de la bague externe 24, 26.

Conformément aux enseignements de l'invention, l'arbre d'entraînement 14 est monté excentré dans la rotule interne 42 de l'articulation inférieure 22 de telle sorte que son axe A1 ne passe pas par le centre C2 de l'articulation 22.

L'arbre d'entraînement 14 est monté dans la rotule interne 42 par une portion cannelée 44 qui empêche toute rotation relative de l'arbre 14 par rapport à la rotule interne 42.

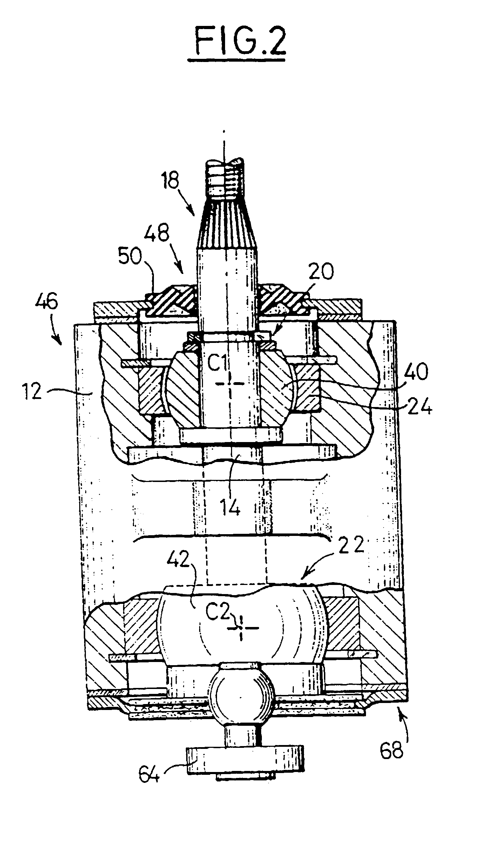

Comme on peut le voir d'après les figures 1 et 2, dans une première position de l'arbre d'entraînement 14, l'axe A1 de l'arbre 14 est agencé parallèlement à l'axe A0 du corps tubulaire 12.

Dans ce mode de réalisation, l'arbre d'entraînement 14 dépasse aux deux extrémités axiales 46, 68 du corps de palier 12, et il est prévu à cet effet des moyens d'étanchéité qui ferment transversalement le palier 12.

A l'extrémité supérieure 46 du corps de palier 12, on a agencé un joint annulaire à membrane souple 48 dont une périphérie externe 50 est fixée sur l'extrémité axiale supérieure 46 du corps de palier 12 et dont une périphérie interne 54 porte de manière étanche sur l'arbre d'entraînement 14.

La rotule interne 42 de l'articulation inférieure 22 comporte un prolongement axial cylindrique 56, qui s'étend vers le bas au-delà de l'extrémité inférieure 68 du corps de palier 12, et qui est muni d'un passage cylindrique 58 au travers duquel dépasse une extrémité libre 60 de l'arbre 14 qui est destinée à être reliée, par l'intermédiaire d'un carré d'entraînement 62, à une manivelle 64 qui s'étend perpendiculairement à l'axe A1.

La manivelle 64 est actionnée par un motoréducteur (non représenté) avec interposition d'une tringlerie de commande (non représentée).

Pour fermer de manière étanche l'extrémité axiale inférieure 68 du corps de palier 12, il est prévu un joint annulaire à membrane souple 66 qui est fixée par une périphérie externe sur l'extrémité inférieure 68 du corps de palier 12 et qui porte, par une périphérie interne, sur la surface cylindrique externe 70 du prolongement 56 de la rotule interne 42.

Par ailleurs, un joint d'étanchéité 72 est agencé entre l'extrémité libre 60 de l'arbre 14 et le prolongement axial 56 de la rotule interne 42.

Comme on peut le voir sur les figures, la rotule interne 40 de l'articulation supérieure 20 est immobilisée axialement sur l'arbre 14 entre un collet radial externe 74 de l'arbre 14 et un anneau élastique fendu 76 qui est monté dans une gorge annulaire 78 de l'arbre 14.

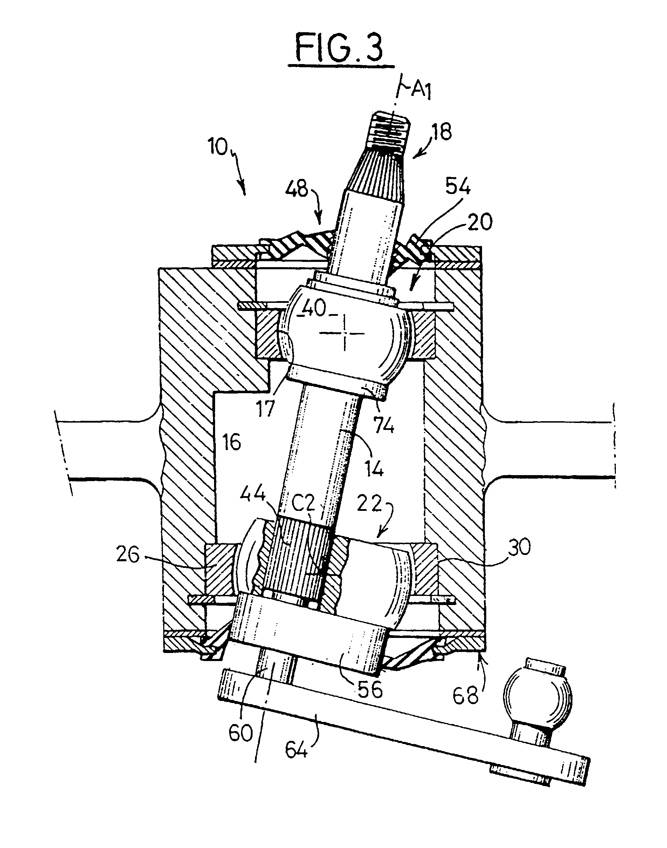

La figure 3 est une vue similaire à celle de la figure 1 dans laquelle l'arbre d'entraînement a pivoté de 180° autour de son axe A1 sous l'effet de la manivelle 64, elle-même actionnée par la tringlerie et le motoréducteur.

Comme on peut le voir sur cette figure, lorsque l'arbre 14 tourne autour de son axe A1, il entraîne avec lui la rotule interne 42 de l'articulation inférieure 22 qui effectue alors un mouvement de rotation autour de son centre C2.

Le centre C2 de la rotule interne n'étant pas situé sur l'axe A1 de l'arbre 14, la rotule interne 42 impose à l'arbre 14 un mouvement de rotation autour du centre C2 qui est fixe par rapport au corps de palier 12 et donc fixe par rapport au véhicule.

De même, l'arbre 14 est animé d'un mouvement de rotation autour du centre C1 de la rotule interne 40 de l'articulation supérieure 20, mais le centre C1 coïncide, dans l'exemple de réalisation, avec l'axe A1 de l'arbre 14.

De la sorte, en plus de son mouvement de rotation autour de son axe A1, l'arbre d'entraînement 14 est animé d'un mouvement de rotation autour de la droite reliant les centres C1, C2 des articulations 20, 22 si bien que l'arbre 14 décrit dans l'espace un mouvement conique et qui induit une variation de l'orientation de l'axe A1 de l'arbre 14 par rapport à l'axe A0 du corps de palier 12 qui est fixe par rapport au véhicule.

L'inclinaison de l'axe A1 par rapport à sa position initiale est maximale pour une rotation de 180° de l'arbre 14, ainsi que cela est illustré sur la figure 3, mais, dans le cas d'une implantation sur un véhicule automobile, l'angle de rotation maximal peut être inférieur.

Les joints à membrane 48, 66 permettent, en se déformant, de maintenir l'étanchéité du palier 10 quelle que soit la position de l'arbre 14.

Grâce à cette conception du palier 10, un essuie-glace fixé sur l'extrémité supérieure 18 de l'arbre 14 est animé non seulement d'un mouvement de balayage autour de l'axe A1 de l'arbre mais il pivote également autour du centre C1 de l'articulation supérieure 20, ce qui modifie son orientation par rapport à la direction générale du panneau de carrosserie et de la vitre.

Plus précisément, l'essuie-glace tend à pivoter autour de son axe longitudinal au cours de sa course de balayage.

La valeur maximale de l'angle de pivotement varie en fonction du rapport entre la distance séparant les deux centres C1, C2 des articulations 20, 22 et l'excentration de l'arbre 14 dans la rotule interne 42 de l'articulation inférieure 22.

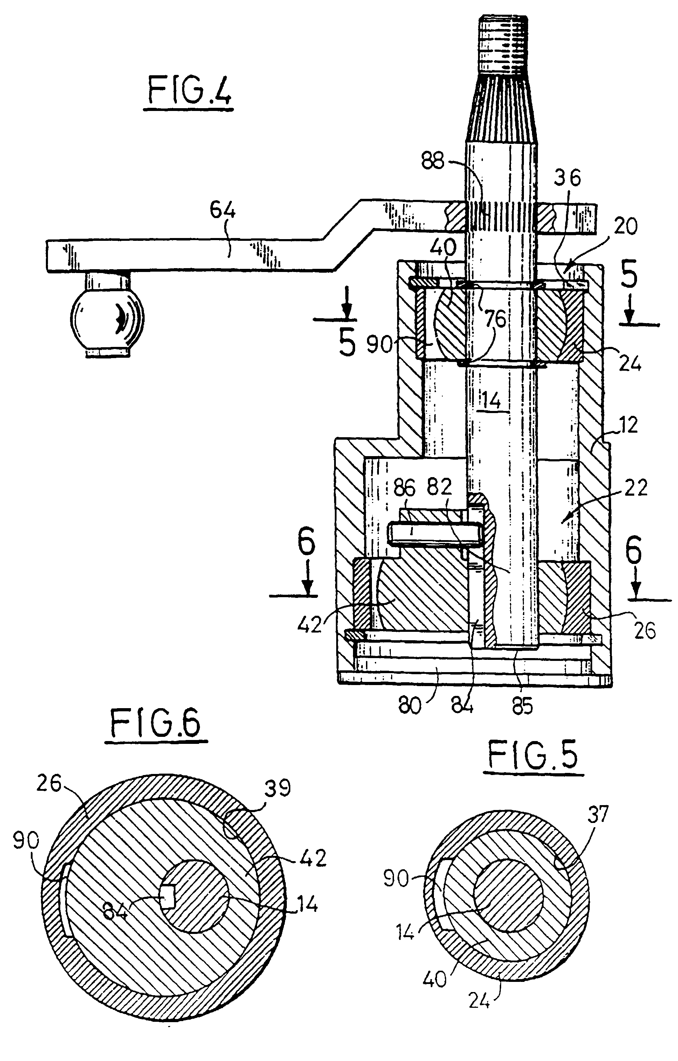

On a représenté sur les figures 4 à 6 un second mode de réalisation de l'invention dans lequel la manivelle 64 est agencée sur l'arbre 14, non pas à son extrémité inférieure, mais axialement entre l'extrémité supérieure 18 de l'arbre 14 et l'extrémité supérieure 46 du corps de palier 12.

Ce mode de réalisation permet d'éviter que l'arbre 14 ne dépasse aux deux extrémités du corps de palier 12 si bien que l'extrémité axiale inférieure 68 du palier 12 est alors obturée par un flasque transversal 80. Par ailleurs, l'extrémité inférieure 82 de l'arbre 14 n'est pas cannelée mais est munie d'une rainure axiale 84, qui débouche dans la face axiale 85 d'extrémité inférieure de l'arbre 14, et qui coopère avec une goupille radiale 86 montée dans la rotule interne 42 de l'articulation inférieure 22 pour accoupler en rotation l'arbre 14 et la rotule interne 42.

Par ailleurs, la rotule interne 40 de l'articulation supérieure 20 est fixée axialement sur l'arbre 14 à l'aide de deux anneaux élastiques 76.

Ce mode de construction d'un palier 10 permet en outre un montage simple de l'ensemble.

En effet, l'articulation inférieure 22, munie de sa goupille radiale 86, est introduite axialement dans l'extrémité inférieure 68 du corps de palier 12 qui est ensuite fermée de manière étanche grâce au flasque transversal 80.

L'arbre 14, muni de l'articulation supérieure 20 et de la manivelle 64 fixée sur l'arbre 14 qui possède à cet effet un tronçon cranté 88, par exemple par moletage, est alors introduit, par l'extrémité supérieure 46, dans le corps de palier 12 et l'extrémité inférieure 82 de l'arbre 14 est introduite dans la rotule interne 42 de l'articulation inférieure, pour faire correspondre la rainure 84 et la goupille radiale 86.

L'articulation supérieure 20 est alors fixée axialement dans le corps de palier 12 grâce à l'anneau élastique 36, ce qui a pour effet de bloquer également axialement l'arbre 14.

Les articulations à rotule 20, 22 utilisées dans ce dernier mode de réalisation comportent des dégagements 90 agencés dans les surfaces sphériques internes 37, 39 de leurs bagues externes 24, 26. Ces dégagements 90 permettent de mieux maîtriser les jeux de fonctionnement et les pressions de contact entre les bagues externes 24, 26 et les rotules internes 40, 42.

Dans les modes de réalisation représentés sur les figures, l'articulation supérieure 20 est centrée sur l'axe A1 de l'arbre 14, ce qui permet de limiter le débattement de l'extrémité supérieure 18 de l'arbre 14 au cours de son mouvement de rotation.

Toutefois, dans certain cas, il peut être intéressant d'utiliser un tel débattement pour mieux adapter la trajectoire de l'essuie-glace lors de son balayage.

On utilise alors une articulation supérieure 20 excentrée. La valeur de l'excentration peut être différente de celle de l'articulation inférieure 22 et l'excentration des deux articulations 20, 22 peut également être décalée angulairement.

## Revendications

1. Dispositif d'essuyage pour une vitre de véhicule automobile, du type dans lequel un essuie-glace s'étend longitudinalement parallèlement au plan général de la vitre à essuyer, du type dans lequel l'essuie-glace est monté à l'extrémité supérieure (18) d'un arbre (14) d'entraînement en balayage rotatif alterné dont l'axe (A1) est sensiblement perpendiculaire au plan général de la vitre, du type dans lequel l'arbre d'entraînement (14) est monté à rotation dans un palier (10) fixe par rapport au véhicule, et du type dans lequel l'arbre d'entraînement (14) est entraîné en rotation par une manivelle (34) qui s'étend dans un plan sensiblement perpendiculaire à l'axe (A1) de l'arbre (10) et qui reliée par une tringlerie à un motoréducteur, l'arbre d'entraînement étant monté à rotation dans le palier par au moins une articulation à rotule avec l'inclinaison de son axe (A1) qui est destinée à varier par rapport au plan de la vitre lorsqu'il est entraîné en rotation autour de son axe (A1), caractérisé en ce que l'arbre d'entraînement (14) est monté à rotation dans le palier (10) par deux articulations à rotule (20, 22), en ce que l'une (22) au moins des articulations à rotule est agencée de sorte que son centre de rotation (C2) est excentré par rapport à l'axe (A1) de l'arbre d'entraînement (14), et en ce que l'arbre (14) est solidaire en rotation d'une rotule interne (42) de l'articulation excentrée (22).

2. Dispositif selon la revendication 1, caractérisé en ce que l'une (22) des articulations à rotule est agencée de sorte que son centre de rotation (C1) coïncide avec l'axe (A1) de l'arbre d'entraînement (14), de manière à former le centre du mouvement d'inclinaison de l'arbre d'entraînement (14).

3. Dispositif selon la revendication 2, caractérisé en ce que le palier (10) est agencé contre une face interne d'un panneau de carrosserie du véhicule au travers duquel dépasse l'extrémité supérieure (18) de l'arbre d'entraînement (14), et en ce que l'articulation à rotule (20) dont le centre (C1) coïncide avec l'axe (A1) de l'arbre (14) est agencée axialement sur l'arbre (14) à proximité du panneau de carrosserie, à une extrémité supérieure (46) du palier (10).

4. Dispositif selon l'une quelconque des revendications précédentes, caractérisé en ce que l'une au moins des extrémités axiales (46, 68) du palier (10) est fermée transversalement de manière étanche par un joint annulaire à membrane souple (48, 66) dont la périphérie externe est fixée sur l'extrémité axiale (46, 68) du palier (10), et dont la périphérie interne coopère de manière étanche avec l'arbre d'entraînement (14).

5. Dispositif selon l'une quelconque des revendications précédentes, caractérisé en ce que le palier (10) est sensiblement tubulaire, et en ce que les articulations à rotule (20, 22) comportent chacune une bague externe de guidage (24, 26) fixée sur une surface cylindrique interne (16) du palier (10), et une rotule interne (40, 42) solidaire de l'arbre (14).

6. Dispositif selon les revendication 4 et 5 prises en combinaison, caractérisé en ce que la rotule interne (42) d'au moins une articulation (22) comporte un prolongement axial (56) dirigé en direction de l'extrémité axiale (68) du palier (10) la plus proche, et en ce que le joint à membrane (66) porte de manière étanche sur le prolongement axial (56).

7. Dispositif selon l'une quelconque des revendications précédentes, caractérisé en ce que la manivelle (64) d'entraînement en rotation de l'arbre (14) est agencée sur l'arbre (14), axialement en dessous du palier (10).

8. Dispositif selon la revendication 7 prise en combinaison avec la revendication 4, caractérisé en ce que le palier (10) est fermé à ses deux extrémités axiales (46, 68) par un joint à membrane (48, 66).

9. Dispositif selon l'une quelconque des revendications 3 à 6, caractérisé en ce que la manivelle (64) d'entraînement en rotation de l'arbre (14) est agencée sur l'arbre (14), axialement entre l'articulation à rotule supérieure (22) et le panneau de carrosserie.

10. Dispositif selon la revendication 9, caractérisé en ce que le palier est fermé à son extrémité axiale inférieure par une paroi transversale.

## Patentansprüche

1. Wischvorrichtung zum Wischen einer Kraftfahrzeugscheibe, bei der sich ein Scheibenwischer in Längsrichtung parallel zur Gesamtebene der zu wischenden Fläche erstreckt, wobei der Scheibenwischer am oberen Ende (18) einer Antriebswelle (14) für eine Pendeldrehwischbewegung angebracht ist, deren Achse (A1) in etwa senkrecht zur Gesamtebene der Scheibe verläuft, wobei die Antriebswelle (14) drehbar in einem im Verhältnis zum Fahrzeug ortsfesten Lager (10) gelagert ist und wobei die Antriebswelle (14) durch eine Kurbel (34) drehend angetrieben wird, die sich in einer Ebene in etwa senkrecht zur Achse (A1) der Welle (10) erstreckt und die durch ein Gestänge mit einem Getriebemotor verbunden ist, wobei die Antriebswelle drehbar in dem Lager durch wenigstens eine Kugelgelenkverbindung mit der Neigung ihrer Achse (A1) gelagert ist, die dazu bestimmt ist, sich im Verhältnis zur Ebene der Scheibe zu verändern, wenn sie drehend um ihre Achse (A1) angetrieben wird, **dadurch gekennzeichnet,** daß die Antriebswelle (14) durch zwei Kugelgelenkverbindungen (20, 22) drehbar in dem Lager (10) gelagert ist, daß wenigstens eine (22) der Kugelgelenkverbindungen so angeordnet ist, daß ihr Drehpunkt (C2) im Verhältnis zur Achse (A1) der Antriebswelle (14) außermittig versetzt ist und daß die Welle (14) drehfest mit einem inneren Kugelgelenk (42) der außermittig versetzten Gelenkverbindung (22) verbunden ist.

2. Vorrichtung nach Anspruch 1, **dadurch gekennzeichnet,** daß eine (22) der Kugelgelenkverbindungen so angeordnet ist, daß ihr Drehpunkt (C1) mit der Achse (A1) der Antriebswelle (14) zusammenfällt, um den Mittelpunkt der Neigungsbewegung der Antriebswelle (14) zu bilden.

3. Vorrichtung nach Anspruch 2, **dadurch gekennzeichnet,** daß das Lager (10) an einer Innenfläche eines Karosserieblechs angeordnet ist, durch welches das obere Ende (18) der Antriebswelle (14) übersteht, und daß die Kugelgelenkverbindung (20), deren Drehpunkt (C1) mit der Achse (A1) der Welle (14) zusammenfällt, axial auf der Welle (14) in der Nähe des Karosserieblechs an einem oberen Ende (46) des Lagers (10) angeordnet ist.

4. Vorrichtung nach einem der vorangehenden Ansprüche, **dadurch gekennzeichnet,** daß wenigstens eines der axialen Enden (46, 68) des Lagers (10) in Querrichtung durch eine biegsame Membranringdichtung (48, 66) dicht verschlossen ist, deren äußerer Umfang am axialen Ende (46, 68) des Lagers (10) befestigt ist und deren innerer Umfang mit der Antriebswelle (14) dicht zusammenwirkt.

5. Vorrichtung nach einem der vorangehenden Ansprüche, **dadurch gekennzeichnet,** daß das Lager (10) in etwa rohrförmig ausgeführt ist und daß die Kugelgelenkverbindungen (20, 22) jeweils einen äußeren Führungsring (24, 26), der auf einer zylindrischen Innenfläche (16) des Lagers (10) befestigt ist, und ein fest mit der Welle (14) verbundenes inneres Kugelgelenk (40, 42) umfassen.

6. Vorrichtung nach den Ansprüchen 4 and 5 in Kombination, **dadurch gekennzeichnet,** daß das innere Kugelgelenk (42) wenigstens einer Gelenkverbindung (22) eine axiale Verlängerung (56) umfaßt, die in Richtung des am nächsten gelegenen axialen Endes (68) des Lagers (10) verläuft, und daß die Membrandichtung (66) dicht auf der axialen Verlängerung (56) aufliegt.

7. Vorrichtung nach einem der vorangehenden Ansprüche, **dadurch gekennzeichnet,** daß die Kurbel (64) zum Drehantrieb der Welle (14) auf der Welle (14) axial unterhalb des Lagers (10) angeordnet ist.

8. Vorrichtung nach Anspruch 7 in Kombination mit Anspruch 4, **dadurch gekennzeichnet**, daß das Lager (10) an seinen beiden axialen Enden (46, 68) durch eine Membrandichtung (48, 66) verschlossen ist.

9. Vorrichtung nach einem der Ansprüche 3 bis 6, **dadurch gekennzeichnet,** daß die Kurbel (64) zum Drehantrieb der Welle (14) auf der Welle (14) axial zwischen der oberen Kugelgelenkverbindung (22) und dem Karosserieblech angeordnet ist.

10. Vorrichtung nach Anspruch 9, **dadurch gekennzeichnet**, daß das Lager an seinem unteren axialen Ende durch eine Querwand verschlossen ist.

## Claims

1. Wiping apparatus for a motor vehicle glass, of the type in which a screen wiper extends longitudinally parallel to the general plane of the glass to be swept, of the type in which the screen wiper is mounted at the upper end (18) of a spindle (14) for driving in alternating rotary wiping movement, the axis (A1) of which is substantially at right angles to the general plane of the glass, of the type in which the drive shaft (14) is mounted for rotation in a bearing (10) which is fixed with respect to the vehicle, and of the type in which the drive spindle (14) is driven in rotation by a crank (34) which lies in a plane substantially at right angles to the axis (A1) of the spindle (10), and which is connected through a linkage to a motorised reduction gear, the drive spindle being mounted for rotation in the bearing by at least one spherical bearing, the inclination of its axis (A1) being variable with respect to the plane of the glass when it is driven in rotation about its axis (A1), characterised in that the drive shaft (14) is mounted for rotation in the bearing (10) by means of two spherical bearings (20, 22), in that at least one (22) of the spherical bearings is so arranged that its centre of rotation (C2) is eccentric with respect to the axis (A1) of the drive spindle (14), and in that the spindle (14) is fixed in rotation to an inner spherical bearing ring (42) of the eccentric spherical bearing (22).

2. Apparatus according to Claim 1, characterised in that one of the spherical bearings (22) is arranged in such a way that its centre of rotation (C1) coincides with the axis (A1) of the drive spindle (14), so as to constitute the centre of the displacement of the inclination of the drive spindle (14).

3. Apparatus according to Claim 2, characterised in that the bearing (10) is arranged against an inner face of a body panel of the vehicle through which the upper end (18) of the drive spindle (14) passes, and in that the spherical bearing (20) the centre (C1) of which coincides with the axis (A1) of the spindle (14) is arranged axially on the spindle (14) close to the body panel, at an upper end (46) of the bearing (10).

4. Apparatus according to any one of the preceding Claims, characterised in that at least one of the axial ends (46, 68) of the bearing (10) is closed transversely and sealingly by an annular flexible membrane seal (48, 66), the outer periphery of which is fixed on the axial end (46, 66) of the bearing (10), and the inner periphery of which is in sealing cooperation with the drive spindle (14).

5. Apparatus according to any one of the preceding Claims, characterised in that the bearing (10) is substantially tubular, and in that each spherical bearing (20, 22) includes an external guide ring (24, 26) which is fixed on an internal cylindrical surface (16) of the bearing (10), and an inner spherical ring (40, 42) fixed to the spindle (14).

6. Apparatus according to Claims 4 and 5 taken in combination, characterised in that the internal spherical ring (42) of at least one spherical bearing (22) includes an axial extension (56) which extends towards the axial end (68) of the bearing (10) closest to it, and in that the membrane seal (66) bears sealingly on the axial extension (56).

7. Apparatus according to any one of the preceding Claims, characterised in that the crank (64) for driving the spindle (14) in rotation is arranged on the spindle (14), axially below the bearing (10).

8. Apparatus according to Claim 7 taken in combination with Claim 4, characterised in that the bearing (10) is closed at both axial ends (46, 68) by a membrane seal (48, 66).

9. Apparatus according to any one of Claims 3 to 6, characterised in that the crank (64) for driving the spindle (14) in rotation is arranged on the spindle (14), axially between the upper spherical bearing 922) and the body panel.

10. Apparatus according to Claim 9, characterised in that the bearing is closed at its lower axial end by a transverse wall.
